# EUROPEAN PATENT SPECIFICATION

(11) **EP 2 164 028 B1**
(45) Date of publication and mention of the grant of the patent: **27.11.2013**
(21) Application number: 08405226.5
(22) Date of filing: 15.09.2008
(51) Int. Cl.: G06K 17/00, G06K 7/10

(54) **Reading device and method for code markings on receptacles**
Lesevorrichtung und -verfahren von Kodierungszeichen auf Behältern
Dispositif et procédé de lecture pour marquages de codes sur des réceptacles

(43) Date of publication of application: 17.03.2010
(73) Proprietor: Frewitt Printing SA, 1720 Corminboeuf (CH)
(72) Inventor: Leyvraz, Philippe, CH-1350 Orbe (CH); Ruffieux, René, CH-2540 Grenchen (CH)
(74) Representative: AMMANN PATENTANWÄLTE AG BERN

(56) References cited:
- EP-A- 0 837 415
- DE-C1- 4 027 992
- US-A- 4 644 151

## Description

The present invention relates to a code reading device for receptacles with at least one code marking at a transparent or translucent circumferential wall section, said device comprising an illumination means for applying light on said wall section and an imaging means for capturing image information of said code markings. In particular, but not exclusively, the present invention relates to a reading device for code markings disposed in or on the side walls of glass receptacles as used in the pharmaceutical or chemical industry. Furthermore, the present invention relates to a method for reading at least one code marking provided at a transparent or translucent circumferential wall section of receptacles.

Patent application no. WO 2004/000749 A1 of the same applicant addresses the need of the pharmaceutical industry to provide medication with an individual code marking for allowing the tracing back of fabricated pharmaceuticals and discloses a method and a device for depositing code markings onto transparent glass receptacles. The method comprises engraving said code markings into the receptacle's glass walls by means of a laser light beam at a wavelength below 380 nm. Subsequently, the readability of each inscribed code marking has to be checked individually by a code reading means in order to allow immediate rejection of erroneous code markings before the filling of the receptacles takes place.

For integrating the code reading procedure into an industrial process flow, a fast and reliable identification of code markings is important while maintaining a large receptacle throughput. To meet these requirements the forecited method comprises successive inscribing and reading of each individual code marking, wherein each respective receptacle is directly moved from the laser inscribing system to the code reading means by a transport device. Thereby, a fast rotation and/or translation must be accomplished seperately for each receptacle by said transport device, wherein previously inscribed code markings have to be provided at an accurately defined spatial reading position. This requires a complex mechanical manipulation for each receptacle, involving rather expensive and spacious equipment for transportation and spatial positioning.

Accordingly, it is an objective of the present invention to provide an improved reading device and method for code markings on receptacles, wherein no complicated handling or alignment of said receptacles is required.

The above objective is achieved with a device or method comprising the features of patent claims 1 or 16. Advantageous embodiments of the invention are defined in the dependent claims.

Document EP-A-0837415 discloses a code reading device for receptacles according to the prior art wherein the illumination means is adapted to provide light on at least three different light paths extending through said circumferential wall section and being relatively spaced such that the associated light incidence positions are disposed circumjacent to said circumferential wall section. This allows for a reliable image-based reading of said code-markings due to the image information obtained by said imaging means based on received light stemming from at least one of said light paths, wherein complex positioning or rotating of said receptacles can be avoided.

Said image information may be gathered by said imaging means from light that is traversing said code markings and/or scattered and/or reflected by said code markings. Correspondingly, said imaging means may be adapted to receive outgoing light stemming from at least one of said light paths that is comprising an incident light portion that is extending towards the lateral and/or back and/or front side of the respective code marking position on said circumferential wall section. Furthermore, said imaging means may be adapted to receive light stemming from multiple light paths, e.g. scattered light stemming from one of said light paths and traversing light stemming from another of said light paths.

The illumination means according to the invention is adapted to provide light successively on each of said light incidence positions, such that the respective illumination periods for each light incidence position are temporally shifted from one another. Thereby, interference effects stemming from light passing through two or more of said different light paths are effectively avoided. Advantageously, said illumination periods may be in a range of 0.1 ms to 100 ms for each of said light incidence positions.

Said temporal shifting of illumination periods for each of said light incidence positions may be achieved by alternating light application on said light paths. For instance, a strobe-like successive application of light pulses on each of said light paths is conceivable. Alternatively, said temporally shifted illumination periods may be provided by a spatial distribution of said light paths along a trajectory of movement of said circumferential wall section. In this case, light may be continously applied on each of said light paths and said circumferential wall section may be moved relatively with respect to different light paths. Thus, the respective illumination period for each of said light incidence positions may be determined by the relative speed of movement of said wall section along said trajectory. In particular, a spiral shaped arrangement of said light paths around said trajectory is conceivable. It is understood, that also a combination of the two embodiments is conceivable, i.e. the application of strobe-like pulses and the relative movement of said wall section with respect to said light paths.

Advantageously, said light incidence positions are equally spaced along said circumferential wall section. Thereby, a maximum coverage of obtainable image information on said wall section is achievable. The obtainable image information may be further enhanced by increasing the number of light paths provided by said illumation means, wherein an odd number of different light paths is preferred. Particularly preferred are at least five different light paths provided by said illumation means.

According to a preferred embodiment, said illumination means comprises at least one light source for each of said light paths, which allows an easy adjustment and control of each light path independently from one another. In order to provide cheap and reliable operation of light on said light paths, said light sources may be formed by light emitting diodes.

According to a further preferred embodiment, said imaging means comprises for each of said light paths at least one camera adapted for receiving light passing through said receptacle, in particular light that is traversing said code markings and/or scattered and/or reflected by said code markings, thus allowing independent image capturing for each light path. For instance, a CCD-camera may be disposed that is associated with each of said light paths. According to one embodiment, said light sources and said cameras may be arranged substantially opposite to one another for each of said light paths, thus allowing the registration of light substantially traversing said code markings. Furthermore, said cameras may be arranged laterally and/or aligned at a certain angle with respect to associated light sources, thus allowing the registration of light scattered and/or reflected by said code markings.

According to another preferred embodiment, said imaging means comprises for each of said light paths at least one deflection means adapted for guiding the light passing through said receptacle to at least one common camera. Thereby, all image information from the different light paths may be captured by a single common camera, such that a costly employment of multiple cameras may be avoided.

According to an advantageous further development of a device according to the invention, said illumination means and/or said imaging means are arranged substantially above or below the vertical length of said receptacles. Thereby, a horizontal movement and/or transportation of said receptacles towards and away from said code reading device can be easily achieved, wherein any movement of said device before, during or after the code reading procedure can be avoided. Thereby, the effect may be exploited that light is scattered and/or reflected by said code markings towards the top in case of an upper arrangement of said illumination means or towards the bottom in case of an lower arrangement of said illumination means, thus allowing said imaging means arranged at the top or bottom to gather image information from said scattered and/or reflected light.

According to a particularly preferred variant of such an upper or lower device arrangement with respect to the horizontal plane of receptacle movement, deflection means are provided for each of said light paths for guiding the light from said illumination means to said circumferential wall section and/or from said circumferential wall section to said imaging means. Alternatively or auxiliary, said illumination means may be arranged in such a way that an acute angle of incidence is provided on each of said light paths, thus allowing the disposal of said illumination means below or above said receptacles.

According to another preferred embodiment of the invention, holding means are provided for holding said receptacle in a fixed position during reading with respect to said illumination means and said imaging means. Thereby, said light paths are preferably disposed concentrically with respect to the cross sectional area of said circumferential wall section in order to provide said circumjacent distribution of incident light with respect to the static position of said circumferential wall section.

According to an alternative preferred embodiment, transportation means are provided for moving said receptacle during the reading procedure along a trajectory relative to said illumination means and said imaging means, thus allowing reading of said code marking during transportation of said receptacles. Thereby, said light paths are preferably disposed in a spiral arrangement around said trajectory such that said circumjacent distribution of incident light with respect to said dynamically moved circumferential wall section is achieved. This may imply, that an incident portion of each of said light paths is arranged substantially perpendicular on a spiral shaped curve, wherein associated light sources and/or cameras may be provided at any distance from said spiral curve. In particular, said trajectory may exhibit a linear or a curved shape, wherein in the latter case said spiral arrangement of said light paths is adjusted to the given curvature.

According to a further preferred variant, said illumination means comprises at least one light guiding means comprising an open end being disposable substantially inside said receptacles, wherein said light paths are provided by light deflection from said open end. Thus, a circumjacent distribution of respective light incidence positions is provided along the inner side wall of said circumferential wall section. For instance, said light guiding means may be a plexiglas light guide, wherein the tip of the guide is disposed inside said receptacles and acts as a mirror for light deflection towards the inner repectacle walls.

Relating to the method for code marking reading, the invention proposes that light is provided on at least three different light paths being relatively spaced such that the associated light incidence positions are disposed circumjacent to said wall section. Preferably, said light is provided successively on each of said light incidence positions, wherein the respective illumination periods are temporally shifted from one another.

Preferred applications of the invention comprise the reading of code markings such as data matrices, QR Codes, bar codes, clear-transparent texts and the like on receptacles such as syringes, flacons, ampuls, cartridges, bottles, vials and the like, in particular in the pharmaceutical, chemical or food industry.

The invention will be described in more detail in the following description of preferred exemplary embodiments with reference to the accompanying drawings. In the drawings:
- Figg. 1a, b: are illustrations of a receptacle with an examplary code marking at a transparent or translucent circumferential wall section;
- Fig. 2: is a schematic representation of the geometry of a code reading device according to an embodiment of the invention in a top view, wherein illumination means and imaging means are disposed in a circular arrangement;
- Figg. 3 and 4: are schematic representations of the geometry of a code reading device according to further embodiments of the invention in a top view, wherein illumination means and imaging means are disposed in a spiral arrangement;
- Figg. 5 to 7: are schematic representations of a code reading device according to further embodiments of the invention in a sectional side view, wherein illumination means and imaging means are arranged above the vertical length of the receptacle;
- Fig. 8: is a schematic representation of a code reading device according to another embodiment of the invention in a sectional side view, wherein illumination means are arranged next to the vertical length of the receptacle;
- Fig. 9: is a schematic representation of the geometry of a code reading device according to a further embodiment of the invention in a top view, wherein illumination means and imaging means are disposed in a spiral arrangement next to a transport path of the receptacle; and
- Fig. 10: is a schematic representation of a code reading device according to another embodiment of the invention in a sectional side view, wherein a plexiglas light guide is disposed for guiding and deflecting light inside the receptacle.

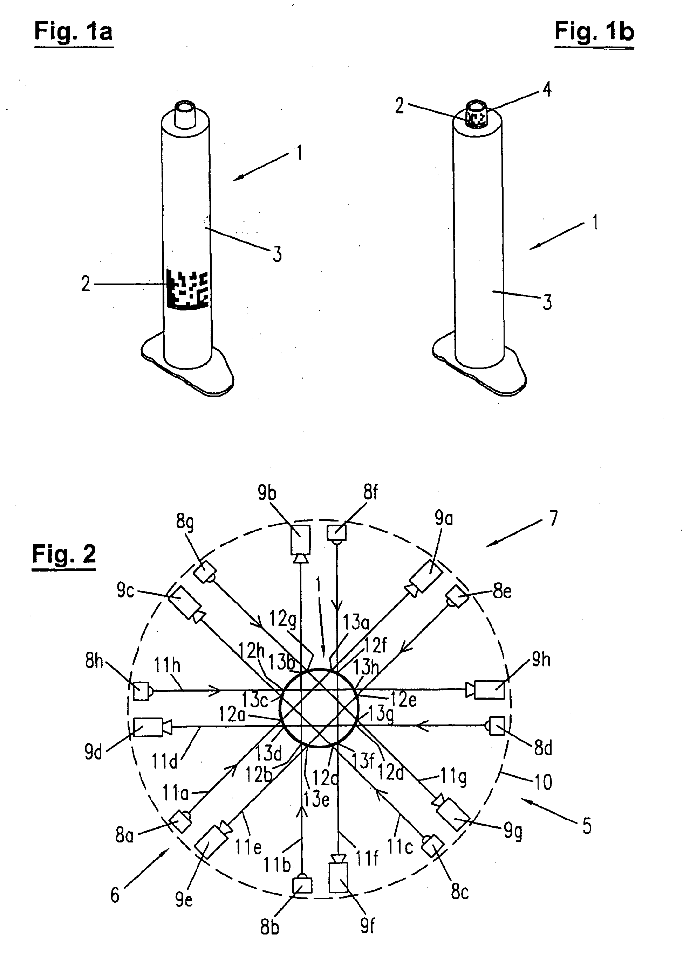

Fig. 1(a) depicts a transparent receptacle 1 in the form of a glass ampoule. A code marking 2 is provided at a circumferential wall section 3 in the lower range of the vertical length of receptacle 1. Said code marking 2 may be placed on the outer or inner surface of said circumferential wall section 3 or disposed inside the glass material. For instance, according to the method disclosed in prior art document WO 2004/000749 A1, said code marking 2 may be engraved inside the glass wall of receptacle 1 by employing a laser light beam at a wavelength below 380 nm. Correspondingly, Fig. 1(b) shows a code marking 2 provided at an upper circumferential wall section 4 of receptacle 1.

Fig. 2 schematically illustrates an embodiment of a code reading device 5 according to the invention comprising an illumination means 6 for applying light on said transparent wall section 3, 4 of receptacle 1 and an imaging means 7 for gathering image information of said code marking 2. Said illumination means 6 includes eight light sources 8a-8h that are arranged on an imaginary circle 10 and substantially equally spaced from one another. Said imaging means 7 includes eight cameras 9a-9h, each of which is arranged substantially opposite to one of said light sources 8a-8h on said circle 10. For instance, said light sources 8a-8h and said cameras 9a-9h may be fixed in a mutually opposed manner along the circumference of an annular body, e.g. on a disc or ring shaped mounting panel.

Said receptacle 1 is provided at a center portion with respect to the horizontal plane defined by said circle 10 such that said light sources 8a-8h and said cameras 9a-9h are perimetrically disposed around said receptacle 1. Thus, eight associated light paths 11a-11h are formed, each extending from one of said light sources 8a-8h through two opposed outer surface portions of said circumferential wall section 3, 4 of receptacle 1 and, thereby, corresponding light incidence positions 12a-12d and outgoing positions 13a-13h of said light paths 11a-11h are disposed, in a mutually opposed manner, circumjacent to said circumferential wall section 3, 4. In the case of light being scattered and/or reflected by said code marking 2, the respective outgoing position 13a-13h may vary with respect to the corresponding light incidence position 12a-12d. Light stemming from each of said light paths 11a-11h is then registered by one of said associated cameras 9a-9h.

Consecutively, a method for the reading of code markings 2 according to the above described code reading device 5 is explained. After transporting said receptacle 1 in its fixed position with respect to the center portion of circle 10, light is applied successively on each of said light paths 11a-11h by alternating operation of each of said light sources 8a-8h. The corresponding illumination periods on each light path 11a-11h may be in a range of 0.1 ms to 100 ms. Thereby, during successive illumination of each of said light paths 11a-11h, corresponding image acquisition comprising image information of said circumferential wall section 3, 4 at the respective light incidence position 12a-12d is carried out by said cameras 9a-9h. In particular, light scattered or reflected from said code markings 2 stemming from one of said light sources 8a-8h may be registered by any of said cameras 9a-9h. Due to successive light application on each of said light paths, interference effects stemming from light passing through a plurality of said light paths 11a-11h are effectively avoided. Subsequently, the gathered image information on each camera 9a-9h is evaluated with respect to said code marking 2. For instance, said receptacle 1 may be rejected if none of said acquired image information corresponds to a predetermined code marking information. Finally, said method is continued by positioning a successive receptacle 1 to the reading position at the center portion of circle 10.

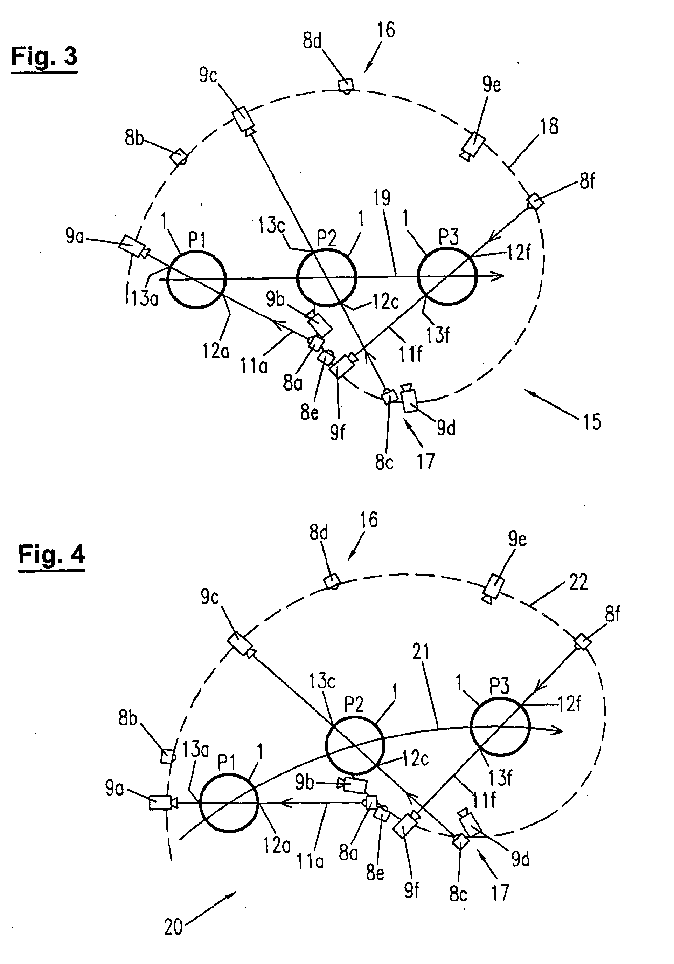

Fig. 3 schematically illustrates an alternative embodiment of a code reading device 15 according to the invention comprising an illumination means 16 including six light sources 8a-8f arranged along an imaginary spiral curve 18. Each of said light sources 8a-8f is facing a respective camera 9a-9f disposed on said spiral curve 18 and constituting an imaging means 17. A straight-lined trajectory 19 for a linear movement of receptacle 1 is arranged in a center portion of said spiral curve 18. For instance, a linear transport of receptacle 1 may be achieved by means of a conveyor belt.

In a corresponding method, said receptacle 1 is moved along said trajectory 19. For the sake of illustration, Fig. 3 depicts receptacle 1 at three successive moving positions P1, P2 and P3 along said trajectory 19. During its movement, in particular at et each moving position P1, P2 and P3, said receptacle 1 successively crosses one respective imaginary connecting line between each of said light sources 8a-8f and its respective opposing camera 9a-9f. Preferably, light is continously applied on each of said light sources 8a-8f. Thus, one respective light path 11a-11f is formed during each of said crossing, each extending from one of said light sources 8a-8f through respective opposing light incidence positions 12a-12f and outgoing positions 13a-13f on said circumferential wall section 3, 4 of receptacle 1 and registered by at least one of said cameras 9a-9f. Thereby, said light incidence positions 12a-12f of said light paths 11a-11f are disposed circumjacent to said circumferential wall section 3, 4, wherein interference effects stemming from light of different light paths 11a-11f are effectively avoided due to the time shifted successive crossing of each of said light paths 11a-11f.

Fig. 4 schematically illustrates a further embodiment of a code reading device 20 according to the invention. The structure of said device 20 basically corresponds to the structure of above discussed device 15 except for a curved trajectory 21 for a bended movement of receptacle 1. Thus, the arrangement of each of said light sources 8a-8f and the respective opposing camera 9a-9f is provided on an imaginary spiral curve 22 that is adapted to the curvature of trajectory 21 in order to provide said successive crossing of each of said light paths 11a-11h and said circumjacent arrangement of said light incidence positions 12a-12f during the curved movement of receptacle 1.

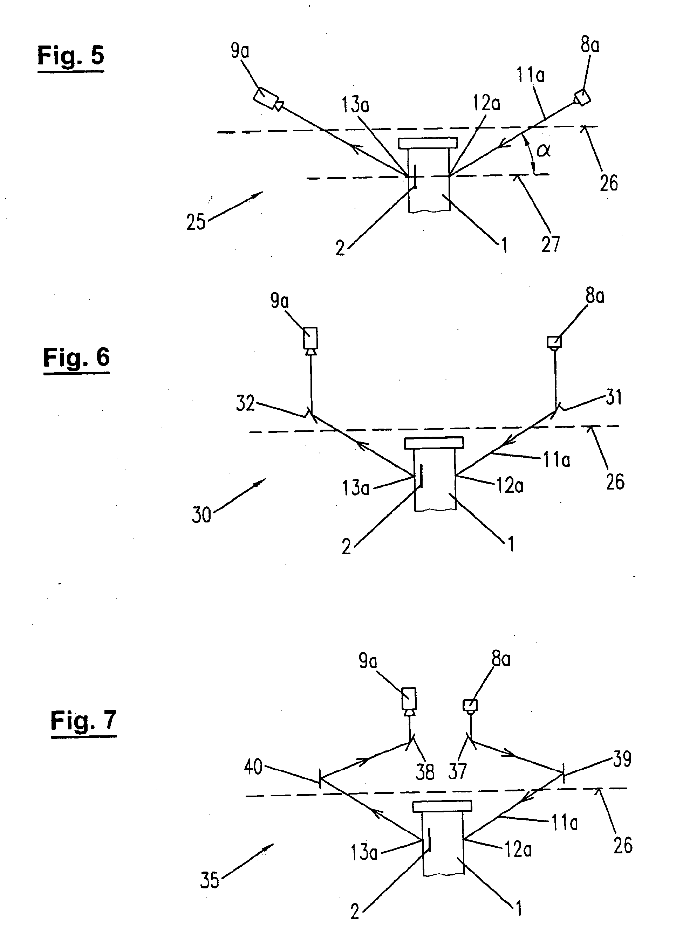

Fig. 5 depicts an embodiment of a code reading device 25 according to the invention in a sectional side view, wherein one of said light paths 11a extending from associated light source 8a through said circumferential wall section 3 of receptacle 1 to the respective opposing camera 9a is schematically illustrated. Thereby, said light source 8a and said camera 9a are arranged above an horizontal plane 26 which is disposed substantially above the vertical length of receptacle 1. Said light source 8a and said camera 9a are vertically tilted with respect to said horizontal plane 26. That way, an acute angle of incidence α is provided at an horizontal plane 27 extending perpendicular at the respective light incidence position 12a. The path section of outgoing light is continuing in an upward direction, for instance due to light scattering or reflection on code marking 2, and registered by camera 9a arranged above said horizontal plane 26. Thus, the horizontal transport of receptacle 1 into the reading position of said code marking 2 and/or during code marking reading can be accomplished below said upper horizontal plane 26 without any displacement of said code reading device 25.

Fig. 6 depicts another embodiment of a code reading device 30 in a sectional side view with said light source 8a and said camera 9a disposed above said horizontal plane 26 and each substantially directed towards the ground floor. Thereby, said acute angle of incident light α is provided by a respective tilted deflection means 31 and the outgoing light is guided to said camera 9a by means of another tilted deflection means 32. Said deflection means 31, 32 are disposed essentially axially symmetrical above said horizontal plane 26 over said receptacle 1.

According to a preferred embodiment, said examplary light path 11a depicted in Fig. 5 and 6 laterally represents the structure of each of said light paths 11a-11h depicted in Figg. 2-4 from a top view, wherein one of said light sources 8a-8h and one of said cameras 9a-9h is associated with each of said light paths 11a-11h.

Fig. 7 illustrates an alternative embodiment of a code reading device 35 in a sectional side view showing one examplary light path 11a and its associated light source 8a, wherein one common camera 9a is provided for each of said light paths 11a-f and associated light sources 8a-8f as depicted in Figg. 2-4. Thereby, one respective tilted deflection means 37, 38 and one respective vertically arranged deflection means 39, 40 is arranged in the incident and outgoing portion of each of said light paths 11a-f for guiding light from each of said light sources 8a-f to the respective circumjacent incidence position 12a-f and each of the respective outgoing light beams to said common camera 9a. This way, only one common camera 9a is required such that manufacturing costs of said code reading device 35 are reduced.

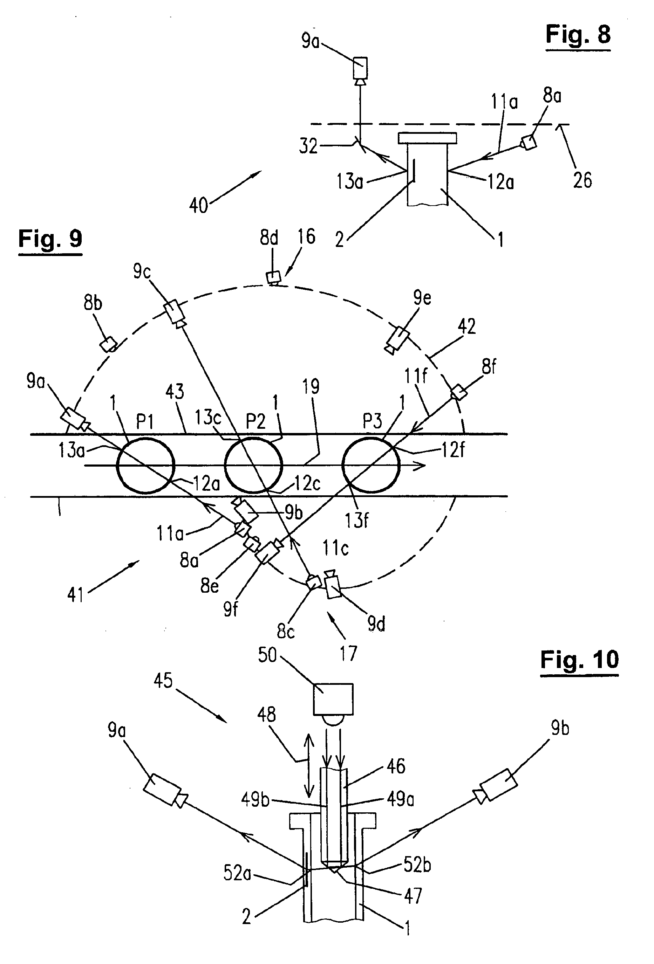

Fig. 8 shows a further embodiment of a code reading device 40 in a sectional side view, wherein said light source 8a and said deflection means 32 for light deflection towards said camera 9a are disposed next to the vertical length of receptacle 1 below said upper horizontal plane 26.

Fig. 9 depicts a preferred embodiment of a code reading device 41 for which said said lateral arrangement of light sources 8a-f and associated cameras 9a-f according to Fig. 8 next to the vertical length of receptacle 1 is conceivable. The principal structure of said device 41 basically corresponds to said code reading device 15 depicted in Fig. 3 such that said light sources 8a-f and associated cameras 9a-f are arranged along an imaginary spiral curve 42. Said spiral curve 42, however, is interrupted at a spatial area that is reserved for a transport channel 43 for said linear movement of receptacle 1 along said trajectory 19 implying that no light sources 8a-f and associated cameras 9a-f are disposed in that area. Thereby, associated light incidence positions 12a-12f may not be disposed equally spaced circumjacent to said circumferencial wall section 3. Blind areas during code marking reading on said circumferential wall section 3 of receptacle 1 may be avoided, however, by an arrangement of light sources 8a, f and associated cameras 9a, f on a close portion of said interrupted spiral curve 42 with respect to to said transport channel 43.

Fig. 10 depicts a further embodiment of a code reading device 45 in a sectional side view comprising a plexiglas light guide 46. The tip 47 of said plexiglas light guide 46 is movable along a vertical axis 48 inside receptacle 1 and acts as a mirror for light deflection towards the inner repectacle walls. Two examplary light paths 49a, b are depicted in Fig. 10, each extending from a common light source 50 arranged substantially above said light guide 46 to different deflection points 51a, b on said tip 43. Thereby, said tip 43 is acting as a mirror for light deflection towards the circumjacent light incidence positions 52a, b along the inner repectacle wall from which the outgoing portions of said light paths 49a, b are continued towards a respective camera 9a, b. Preferably, at least three different light paths 49a, b are provided by said light guide 46 resulting in a circumjacent distribution of respective light incidence positions 52a, b along the inner side wall of said circumferential wall section 3.

It should be understood that while certain variants of the present invention are illustrated and described herein, the invention is defined by the claims and is not to be limited to the specific embodiments described and shown. For example, although the specific embodiments described herein are applied on receptacles with a code marking on a circular circumferential wall section, said reading of code markings according to the invention is also conceivable on one or more code markings provided on non-circular and/or discontinous circumferential wall sections of receptacles.

Furthermore, although light paths exemplified in specific embodiments described herein linearly extend in one direction, variations are contemplated in which said light paths consist of several portions that are scattered or reflected in various directions. Said scattered or reflected light may be stemming from light paths with an incident portion extending substantially at the front or back side or laterally with respect to the position of said code markings on said circumferential wall section and may be registered by an associated camera disposed at the respective position of the outgoing portion of said light path of scattered light. Also it is conceivable that two or more different light paths are formed by a continously expanded light beam of one light source and/or said circumjacent light incidence positions are not disposed at separated surface portions but continously extend along said circumferential wall section.

## Claims

1. Code reading device for receptacles (1) with at least one code marking (2) at a transparent or translucent circumferential wall section (3, 4), said device comprising an illumination means (6, 16) for applying light on said wall section and an imaging means (7, 17) for capturing image information of said code markings, that said illumination means (6, 16) is adapted to provide light on at least three different light paths (11a-f, 49a, b) extending through said wall section (3, 4) and being relatively spaced such that the associated light incidence positions (12a-f, 52a, b) are disposed circumjacent to said wall section (3, 4), **characterized in that** said illumination means (6, 16) is adapted to provide light successively on each of said light incidence positions (12a-f, 52a, b), such that the respective illumination periods are temporally shifted from one another.

2. Code reading device according to claim **1**, **characterized in that** said temporally shifted illumination periods are provided by alternating light application on said light paths (11a-f, 49a, b).

3. Code reading device according to claim **1** or **2**, **characterized in that** said temporally shifted illumination periods are provided by a spatial distribution of said light paths (11a-f, 49a, b) along a trajectory (19, 21) of said receptacle (1).

4. Code reading device according to at least one of the claims **1** to **3**, **characterized in that** said illumination periods are in a range of 0.1 ms to 100 ms for each of said light incidence positions (12a-f, 52a, b).

5. Code reading device according to at least one of the claims 1 to **4**, **characterized in that** said light incidence positions (12a-f, 52a, b) are equally spaced along said circumferential wall section (3, 4).

6. Code reading device according to at least one of the claims 1 to **5**, **characterized in that** said illumination means (6, 16) comprises at least one light source (8a-f), preferably a light emitting diode, for each of said light paths (11a-f, 49a, b).

7. Code reading device according to at least one of the claims 1 to **6**, **characterized in that** said imaging means (7, 17) comprises at least one camera (9a-f) for each of said light paths (11a-f, 49a, b), preferably a CCD camera, adapted for receiving light passing through said wall section (3, 4).

8. Code reading device according to claims **6** and **7**, **characterized in that** for each of said light paths (11a-f, 49a, b) said light source (8a-f) and said camera (9a-f) are arranged substantially opposite to one another.

9. Code reading device according to at least one of the claims 1 to **8**, **characterized in that** for each of said light paths (11a-f, 49a, b) said imaging means comprises at least one deflection means (38, 40) adapted for guiding light passing through said receptacle (1) to at least one common camera (9a).

10. Code reading device according to at least one of the claims 1 to **9**, **characterized in that** said illumination means (6, 16) and/or said imaging means (7, 17) is arranged substantially above or below the vertical length of said receptacles (1).

11. Code reading device according to at least one of the claims 1 to **10**, **characterized in that** said illumination means (6, 16) is arranged such that an acute angle of incidence (α) is provided on each of said light paths (11a-f, 49a, b).

12. Code reading device according to at least one of the claims 1 to **11**, **characterized in that** a holding means is provided for holding said receptacle in a fixed position with respect to said illumination means (6, 16) and said imaging means (7, 17), wherein said light paths (11a-f, 49a, b) are disposed concentrically with respect to the cross sectional area of said circumferential wall section (3, 4).

13. Code reading device according to at least one of the claims 1 to **12**, **characterized in that** transportation means are provided for moving said receptacle along a trajectory (19, 21) relative to said illumination means (6, 16) and said imaging means (7, 17), wherein said light paths (11a-f, 49a, b) are disposed in a spiral arrangement (18, 22) around said trajectory (19, 21).

14. Code reading device according to claim **13**, **characterized in that** said trajectory (21) is curved, wherein said spiral arrangement (22) of said light paths (11a-f, 49a, b) is adjusted to this curvature.

15. Code reading device according to at least one of the claims 1 to **14**, **characterized in that** said illumination means (6, 16) comprises at least one light guiding means (46) comprising an open end (47) being disposable substantially inside said receptacles (1), wherein said light paths are provided by light deflection from said open end (47).

16. Method for reading at least one code marking provided at a transparent or translucent circumferential wall section of receptacles, wherein light is applied on said wall section and image information of said code marking is captured during illumination of said wall section, said light is provided on at least three different light paths extending through said wall section and being relatively spaced such that the associated light incidence positions are disposed circumjacent to said wall section, **characterized in that** said light is provided successively on each of said light incidence positions, wherein the respective illumination periods are temporally shifted from one another.

## Patentansprüche

1. Codelesevorrichtung für Behälter (1) mit mindestens einer Codemarkierung (2) an einem transparenten oder lichtdurchlässigen umlaufenden Wandabschnitt (3, 4), wobei die Vorrichtung ein Beleuchtungsmittel (6, 16) zum Beleuchten des Wandabschnitts und ein Abbildungsmittel (7, 17) zum Erfassen von Bildinformationen der Codemarkierungen umfasst und das Beleuchtungsmittel (6, 16) ausgebildet ist, Licht auf mindestens drei verschiedenen Strahlengängen (11a-f, 49a, b) zuzuführen, die durch den Wandabschnitt (3, 4) verlaufen und derart voneinander beabstandet sind, dass die zugehörigen Lichteinfallspositionen (12a-f, 52a, b) den Wandabschnitt (3, 4) umgebend angeordnet sind, **dadurch gekennzeichnet, dass** das Beleuchtungsmittel (6, 16) ausgebildet ist, den Lichteinfallspositionen (12a-f, 52a, b) jeweils nacheinander Licht zuzuführen, so dass die jeweiligen Beleuchtungsperioden gegenseitig zeitversetzt sind.

2. Codelesevorrichtung nach Anspruch 1, **dadurch gekennzeichnet, dass** sich die zeitversetzten Beleuchtungsperioden durch abwechselndes Beleuchten auf den Strahlengängen (11a-f, 49a, b) ergeben.

3. Codelesevorrichtung nach Anspruch 1 oder 2, **dadurch gekennzeichnet, dass** sich die zeitversetzten Beleuchtungsperioden durch räumliche Verteilung der Strahlengänge (11a-f, 49a, b) entlang einer Bewegungsbahn (19, 21) des Behälters (1) ergeben.

4. Codelesevorrichtung nach mindestens einem der Ansprüche 1 bis 3, **dadurch gekennzeichnet, dass** die Beleuchtungsperioden für die Lichteinfallspositionen (12a-f, 52a, b) jeweils im Bereich von 0,1 ms bis 100 ms liegen.

5. Codelesevorrichtung nach mindestens einem der Ansprüche 1 bis 4, **dadurch gekennzeichnet, dass** die Lichteinfallspositionen (12a-f, 52a, b) gleichmässig entlang dem umlaufenden Wandabschnitt (3, 4) beabstandet sind.

6. Codelesevorrichtung nach mindestens einem der Ansprüche 1 bis 5, **dadurch gekennzeichnet, dass** das Beleuchtungsmittel (6, 16) für jeden der Strahlengänge (11a-f, 49a, b) mindestens eine Lichtquelle (8a-f) aufweist, vorzugsweise eine Leuchtdiode.

7. Codelesevorrichtung nach mindestens einem der Ansprüche 1 bis 6, **dadurch gekennzeichnet, dass** das Abbildungsmittel (7, 17) für jeden Strahlengang (11a-f, 49a, b) mindestens eine Kamera (9a-f) aufweist, vorzugsweise eine CCD-Kamera, die ausgebildet ist, durch den Wandabschnitt (3, 4) hindurchtretendes Licht zu empfangen.

8. Codelesevorrichtung nach den Ansprüchen 6 und 7, **dadurch gekennzeichnet, dass** die Lichtquelle (8a-f) und die Kamera (9a-f) für jeden Strahlengang (11a-f, 49a, b) im Wesentlichen gegenüberliegend angeordnet sind.

9. Codelesevorrichtung nach mindestens einem der Ansprüche 1 bis 8, **dadurch gekennzeichnet, dass** das Abbildungsmittel für jeden Strahlengang (11a-f, 49a, b) mindestens ein Ablenkmittel (38, 40) aufweist, das ausgebildet ist, durch den Behälter (1) hindurchtretendes Licht zu mindestens einer gemeinsamen Kamera (9a) zu leiten.

10. Codelesevorrichtung nach mindestens einem der Ansprüche 1 bis 9, **dadurch gekennzeichnet, dass** das Beleuchtungsmittel (6, 16) und/oder das Abbildungsmittel (7, 17) im Wesentlichen über oder unter der senkrechten Länge der Behälter (1) angeordnet ist bzw. sind.

11. Codelesevorrichtung nach mindestens einem der Ansprüche 1 bis 10, **dadurch gekennzeichnet, dass** das Beleuchtungsmittel (6, 16) so angeordnet ist, dass sich auf den jeweiligen Strahlengängen (11a-f, 49a, b) ein spitzer Einfallswinkel (α) ergibt.

12. Codelesevorrichtung nach mindestens einem der Ansprüche 1 bis 11, **dadurch gekennzeichnet, dass** ein Haltemittel vorgesehen ist, um den Behälter in einer gegenüber dem Beleuchtungsmittel (6, 16) und dem Abbildungsmittel (7, 17) fixierten Position zu halten, wobei die Strahlengänge (11a-f, 49a, b) konzentrisch zur Querschnittsfläche des umlaufenden Wandabschnitts (3, 4) angeordnet sind.

13. Codelesevorrichtung nach mindestens einem der Ansprüche 1 bis 12, **dadurch gekennzeichnet, dass** Transportmittel vorgesehen sind, um den Behälter gegenüber dem Beleuchtungsmittel (6, 16) und dem Abbildungsmittel (7, 17) entlang einer Bahn (19, 21) zu bewegen, wobei die Strahlengänge (11a-f, 49a, b) spiralförmig (18, 22) um die Bewegungsbahn (19, 21) angeordnet sind.

14. Codelesevorrichtung nach Anspruch 13, **dadurch gekennzeichnet, dass** die Bewegungsbahn (21) gekrümmt ist, wobei die spiralförmige Anordnung (22) der Strahlengänge (11a-f, 49a, b) an die Krümmung angepasst ist.

15. Codelesevorrichtung nach mindestens einem der Ansprüche 1 bis 14, **dadurch gekennzeichnet, dass** das Beleuchtungsmittel (6, 16) mindestens ein Lichtleitmittel (46) mit einem offenen Ende (47) aufweist, das im Wesentlichen innerhalb der Behälter (1) anordenbar ist, wobei die Strahlengänge durch Lichtablenkung von dem offenen Ende (47) entstehen.

16. Verfahren zum Lesen mindestens einer an einem transparenten oder lichtdurchlässigen umlaufenden Wandabschnitt von Behältern angebrachten Codemarkierung, wobei der Wandabschnitt beleuchtet und während des Beleuchtens des Wandabschnitts Bildinformationen der Codemarkierung erfasst werden und das Licht auf mindestens drei verschiedenen Strahlengängen zugeführt wird, die durch den Wandabschnitt verlaufen und derart voneinander beabstandet sind, dass die zugehörigen Lichteinfallspositionen den Wandabschnitt umgebend angeordnet sind, **dadurch gekennzeichnet, dass** das Licht den Lichteinfallspositionen jeweils nacheinander zugeführt wird, wobei die jeweiligen Beleuchtungsperioden gegenseitig zeitverschoben sind.

## Revendications

1. Dispositif de lecture de codes pour récipients (1) pourvus d'au moins un codage (2) sur une section de paroi (3, 4) circonférentielle transparente ou translucide, ledit dispositif comprenant un moyen d'illumination (6, 16) pour projeter de la lumière sur ladite section de paroi et un moyen imageur (7, 17) pour capter les informations d'image desdits codages et ledit moyen d'illumination (6, 16) étant adapté à fournir de la lumière sur au moins trois trajectoires lumineuses (11a-f, 49a, b) différentes passant par ladite section de paroi (3, 4) et espacées de telle manière que les positions d'incidence lumineuse (12a-f, 52a, b) y associées sont disposées autour de ladite section de paroi (3, 4), **caractérisé en ce que** ledit moyen d'illumination (6, 16) est adapté à fournir de la lumière successivement à chacune desdites positions d'incidence lumineuse (12a-f, 52a, b), de sorte que les périodes d'illumination respectives sont temporellement décalées l'une de l'autre.

2. Dispositif de lecture de codes selon la revendication 1, **caractérisé en ce que** lesdites périodes d'illumination temporellement décalées résultent d'une projection alternante de la lumière sur lesdites trajectoires lumineuses (11a-f, 49a, b).

3. Dispositif de lecture de codes selon la revendication 1 ou 2, **caractérisé en ce que** lesdites périodes d'illumination temporellement décalées résultent d'une distribution spatiale desdites trajectoires lumineuses (11a-f, 49a, b) le long d'une trajectoire (19, 21) dudit récipient (1).

4. Dispositif de lecture de codes selon l'une au moins des revendications 1 à 3, **caractérisé en ce que** lesdites périodes d'illumination sont dans une plage de 0,1 ms à 100 ms pour chacune desdites positions d'incidence lumineuse (12a-f, 52a, b).

5. Dispositif de lecture de codes selon l'une au moins des revendications 1 à 4, **caractérisé en ce que** lesdites positions d'incidence lumineuse (12a-f, 52a, b) sont régulièrement espacées le long de ladite section de paroi (3, 4) circonférentielle.

6. Dispositif de lecture de codes selon l'une au moins des revendications 1 à 5, **caractérisé en ce que** ledit moyen d'illumination (6, 16) comprend au moins une source lumineuse (8a-f), préférablement une diode électroluminescente, pour chacune desdites trajectoires lumineuses (11a-f, 49a, b).

7. Dispositif de lecture de codes selon l'une au moins des revendications 1 à 6, **caractérisé en ce que** ledit moyen imageur (7, 17) comprend au moins une caméra (9a-f) pour chacune desdites trajectoires lumineuses (11a-f, 49a, b), préférablement une caméra CCD, adaptée à capter la lumière passant par ladite section de paroi (3, 4).

8. Dispositif de lecture de codes selon les revendications 6 et 7, **caractérisé en ce que** pour chacune desdites trajectoires lumineuses (11a-f, 49a, b) ladite source lumineuse (8a-f) et ladite caméra (9a-f) sont agencées substantiellement en face l'une de l'autre.

9. Dispositif de lecture de codes selon l'une au moins des revendications 1 à 8, **caractérisé en ce que** pour chacune desdites trajectoires lumineuses (11a-f, 49a, b) ledit moyen imageur comprend au moins un moyen de déflexion (38, 40) adapté à guider la lumière passant par ledit récipient (1) vers au moins une caméra (9a) commune.

10. Dispositif de lecture de codes selon l'une au moins des revendications 1 à 9, **caractérisé en ce que** ledit moyen d'illumination (6, 16) et/ou ledit moyen imageur (7, 17) est/sont agencé/s substantiellement au-dessus ou en-dessous de la longueur verticale desdits récipients (1).

11. Dispositif de lecture de codes selon l'une au moins des revendications 1 à 10, **caractérisé en ce que** ledit moyen d'illumination (6, 16) est agencé de telle manière qu'un angle d'incidence (α) aigu résulte sur chacune desdites trajectoires lumineuses (11a-f, 49a, b).

12. Dispositif de lecture de codes selon l'une au moins des revendications 1 à 11, **caractérisé en ce qu'**un moyen de retenue est pourvu pour retenir ledit récipient dans une position fixe par rapport audit moyen d'illumination (6, 16) et ledit moyen imageur (7, 17), lesdites trajectoires lumineuses (11a-f, 49a, b) étant disposées concentriquement à la superficie en coupe de ladite section de paroi (3, 4) circonférentielle.

13. Dispositif de lecture de codes selon l'une au moins des revendications 1 à 12, **caractérisé en ce que** des moyens de transport sont pourvus pour déplacer ledit récipient le long d'une trajectoire (19, 21) par rapport audit moyen d'illumination (6, 16) et audit moyen imageur (7, 17), lesdites trajectoires lumineuses (11a-f, 49a, b) étant disposées selon un agencement en spirale (18, 22) autour de ladite trajectoire (19, 21).

14. Dispositif de lecture de codes selon la revendication 13, **caractérisé en ce que** ladite trajectoire (21) est courbée, ledit agencement en spirale (22) desdites trajectoires lumineuses (11a-f, 49a, b) étant adapté à cette courbure.

15. Dispositif de lecture de codes selon l'une au moins des revendications 1 à 14, **caractérisé en ce que** ledit moyen d'illumination (6, 16) comprend au moins un moyen conducteur de lumière (46) ayant une extrémité ouverte (47) pouvant être placée substantiellement à l'intérieur desdits récipients (1), lesdites trajectoires lumineuses étant pourvues par déflexion lumineuse à partir de ladite extrémité ouverte (47).

16. Procédé de lecture d'au moins un codage pourvu sur une section de paroi circonférentielle transparente ou translucide de récipients où de la lumière est projetée sur ladite section de paroi et des informations d'image dudit codage sont captées pendant l'illumination de ladite section de paroi, et ladite lumière est fournie sur au moins trois trajectoires lumineuses différentes passant par ladite section de paroi et espacées de telle manière que les positions d'incidence lumineuse y associées sont disposées autour de ladite section de paroi, **caractérisé en ce que** ladite lumière est fournie successivement à chacune desdites positions d'incidence lumineuse, les périodes d'illumination respectives étant temporellement décalées l'une de l'autre.
